# EUROPÄISCHE PATENTSCHRIFT

(11) **EP 0 461 365 B1**
(45) Veröffentlichungstag und Bekanntmachung des Hinweises auf die Patenterteilung: **10.08.1994**
(21) Anmeldenummer: 91106302.2
(22) Anmeldetag: 19.04.1991
(51) Int. Cl.: B29C 43/34, B29C 31/04, B29B 17/00

(54) **Verfahren und Vorrichtung zur Beschickung eines Kunststoff-Pressformwerkzeugs mit extrudiertem Kunststoff**
Process and apparatus for feeding a compression mould with extruded plastics
Procédé et appareil pour alimenter un moule de compression en matière plastique

(30) Priorität: 12.06.1990 DE 4018706
(43) Veröffentlichungstag der Anmeldung: 18.12.1991
(73) Patentinhaber: Stegmaier, Peter, D-73630 Remshalden (DE)
(72) Erfinder: Stegmaier, Peter, D-73630 Remshalden (DE)
(74) Vertreter: Hosenthien, Heinz

(56) Entgegenhaltungen:
- EP-A- 0 005 961
- EP-A- 0 268 199
- FR-A- 1 486 417
- US-A- 1 944 464
- US-A- 3 443 277
- US-A- 3 759 653
- US-A- 4 003 866
- US-A- 4 304 751
- US-A- 4 321 027
- PATENT ABSTRACTS OF JAPAN, Band 5, Nr. 172 (M-095), 31. Oktober 1981;& JP-A-56 98 120 (YAMAKAWA KOGYO K.K.) 07-08-1981
- PATENT ABSTRACTS OF JAPAN, Band 8, Nr. 191 (M-332)[1628], 4. September 1984;& JP-A-59 81 123 (TOYOTA JIDOSHA K.K.) 10-05-1984
- PATENT ABSTRACTS OF JAPAN, Band 10, Nr. 207 (M-500)[2263], 19. Juli 1986;& JP-A-61 47 232 (MEIWA SANGYO K.K.) 07-03-1986

## Beschreibung

Die Erfindung betrifft ein verfahren gemäß Oberbegriff des Anspruchs 1 und eine Vorrichtung gemäß Oberbegriff des Anspruchs 5 zur Beschickung eines Preßformwerkzeugs mit extrudiertem Kunststoff, insbesondere unter Verwendung von rieselfähig zerkleinerten Recycling-Kunststoffen, die in einem vorgegebenen Mischungsverhältnis ggf. unter Beimischung eines Thermoplasten als Bindemittel dem Extruder zugeführt, unter Erwärmung und ggf. Entgasung innig vermischt, durch den Austritt eines beheizten Extrusionswerkzeugs extrudiert und in abgemessenen Extrudat-Portionen unter Verwendung einer beheizten Transportvorrichtung einem Preßformwerkzeug zugeführt werden (DE-A-3925029).

Bei der Dosierung erfolgt die Gewichtserfassung während der Ablage des Kunststoffpreßstrangs. Das Abschneiden des Preßstrangs muß vor Erreichen des Sollgewichts erfolgen, da ja das Ende des Preßstrangs noch mit dem Extruder verbunden ist und von der Wiegevorrichtung dieser Gewichtsanteil noch nicht von der Bandwaage erfaßt werden kann. Je nach den Extrusionsbedingungen und Portionsgrößen schwankt dieser nicht erfaßte Gewichtsanteil.

Die in den beheizten Behältern zwischengespeicherten Portionen werden je nach Bedarf in die Beschickungsmulden eines geöffneten Preßformwerkzeugs eingebracht, wonach bei Schließung des Preßformwerkzeugs der dosiert zugeführte Kunststoff zum Endprodukt verpreßt wird. Nachteilig ist hierbei, daß die Extrudat-Portion klumpenartig, d.h. ohne eine bestimmte Form aufzuweisen, in eine Beschickungsmulde des Preßformwerkzeugs abgelegt wird. Besonders bei großflächigen Kunststoffteilen ist daher der notwendige Preßdruck zur Formung des Kunststoff-Endproduktes erheblich, so daß für den Preßvorgang großdimensionierte Pressen verwendet werden müssen, mit einem entsprechenden Preßenergieaufwand. Aufgrund der klumpenartigen Form der Extrudat-Portion muß diese beim Verpressen, insbesondere zu einem flächigen Kunststoffendprodukt, erheblich verformt werden, da zum Ausfüllen der Beschickungsmulde große Fließwege zurückzulegen sind. Die hiermit verbundenen Scherkräfte führen zu teilweise erheblichen Eigenspannungen im fertigen Kunststoffteil, was oft eine Verformung oder Verwerfung des ausgeformten Kunststoffteils mit sich bringt und somit unbrauchbare Teile entstehen. Um dies zu vermeiden, sind noch während sich das Endprodukt im Preßformwerkzeug befindet, aufwendige Temperungsmaßnahmen erforderlich, was den Vorrichtungs- und Energieaufwand der Presse/Preßformwerkzeug erheblich vergrößert.

Aus der EP 268 199 Al ist das streifenförmige Ablegen des Kunststoffpreßstrangs auf einem Förderband bekannt. Bei komplizierten Preßformen kann hier keine befriedigende formangepasste Preßmassenverteilung beim Beschicken der Preßform erreicht werden.

In Vermeidung der geschilderten Nachteile liegt der Erfindung die Aufgabe zugrunde, ein Verfahren und eine Vorrichtung der eingangs genannten Art zu schaffen, bei dem eine Verbesserung der Beschickung des Preßformwerkzeugs erreicht werden soll, und dabei die notwendigen Preßkräfte während dem Preßvorgang reduziert und die Eigenspannungen im fertig gepreßten Kunststoffteil vermindert sind.

Zur Lösung dieser Aufgabe sieht die Erfindung als Verfahren vor, daß der das Extrusionswerkzeug verlassende Extrudat-Strang auf einer temperierten und gesteuert oszillierend bewegbaren Ablage mäanderartig neben und/oder aufeinander abgelegt wird und zwar auf einer Grundfläche, die etwa der Beschickungsfläche des im Preßformwerkzeug zu formenden Kunststoffteils oder einer Teilfläche davon und dessen gewünschter Preßmassenverteilung entspricht und bei Erreichen einer vorgegebenen Extrudat-Portionsgröße abgetrennt wird, wobei ggf. mehrere Extrudat-Portionen auf der Ablage abgelegt und der Transport-Vorrichtung zugeführt werden, und daß das Gewicht des auf der Ablage abgelegten Extrudat-Strangs erfaßt und bei Erreichen eines vorbestimmten Soll-Wertes ein Signal an eine Trennvorrichtung zum Durchtrennen des Extrudat-Strangs erfolgt, wonach das Gewicht der abgelegten Extrudat-Portion erfaßt und bei Abweichung um einen vorbestimmten Toleranzbetrag ausgeschieden wird, und ggf. eine Korrektur des Soll-Wertes oder Einstellung eines temporären Soll-Wertes erfolgt. Hierdurch ist eine Konfektionierung der Extrudat-Portionen, d.h. der Extrudat-Rohlinge in Abhängigkeit der geometrischen Form des fertigen Kunststoffteils möglich, d.h., die Erzeugung einer insbesondere weitgehend flächigen Extrudat-Portion, deren Breite zum Teil abhängig der Austrittsquerschnittsform des Extrusionswerkzeugs ist, und dessen Länge, Breite, sowie örtliche Dicke abhängig der Oszillations-Geschwindigkeit und des Oszillationshubes während einer Oszillation der Ablage während dem Ablegevorgang des Extrudat-Strangs ist. Ein mäanderartiges Aufeinanderstapeln von einzelnen Strang-Lagen zu einem flächigen Gebilde bringt große Vorteile bei der endgültigen Formgebung innerhalb des Preßformwerkzeugs in der Presse mit sich, da geringere Fließwege zur Ausfüllung der Beschickungsmulde im Preßformwerkzeug nötig sind, was nahezu ein Ausbleiben von Eigenspannungen im fertigen Kunststoffteil aufgrund von "eingefroreren" Scherkräften zur Folge hat.

Es lassen sich flächige Extrudat-Portionen herstellen, die ungefähr die fertige Kunststoffteilform aufweisend dem Preßformwerkzeug zugeführt werden und bei entsprechend geringer Preßkraft zum fertigen Kunststoffteil verpreßt werden. Die gepreßten Kunststoffteile weisen ferner wesentlich geringere Eigenspannungen im Vergleich zu Kunststoffteilen auf, deren Extrudat-Rohling nicht bereits abhängig des im Preßformwerkzeug zu formenden Kunststoffteils geformt worden sind.

Weiter läßt sich eine optimale Materialausnutzung erreichen, da nur Extrudat-Portionen mit dem tatsächlich notwendigen Fertigteil-Gewicht verpreßt werden, wodurch Kunststoff-Überläufe in der Preßform während des Verpressens vermieden werden, mit sich hieraus ergebenden Vorteilen bei der Endbearbeitung des fertigen Kunststoffteils. Diese "on-line"-Erfassung des Gewichts ermöglicht eine rechtzeitige Korrektur der Einstell-Parameter des Extrusions-Vorganges. Zweckmäßigerweise ist vorgesehen, daß das Verfahren elektronisch gesteuert und überwacht, d.h. automatisiert, insbesondere mittels einer zentralen elektronischen Kontroll- und Steuervorrichtung durchgeführt werden kann, mit allen sich hieraus ergebenden Rationalisierungs- und Automatisierungsvorteilen, die eine zentral gesteuerte Anlage mit sich bringt.

Um auch für ein Kunststoffteil mit unterschiedlicher örtlicher Dickenverteilung einen entsprechenden Extrudat-Rohling vorsehen zu können, ist in besonders vorteilhafter Weise beim Verfahren vorgesehen, daß die Oszillationsgeschwingkeit der Ablage und der Oszillationshub (Weg) während dem Ablegen des Extrudat-Strangs veränderbar sein kann. Insbesondere wird zur schlupffreien Ablage des Extrudat-Strangs die Oszillationsgeschwindigkeit gleich der Austrittsgeschwindigkeit des Extrudat-Strangs aus dem Extrusionswerkzeug, d.h. gleich der materialspezifischen Beschickungsgeschwindigkeit des Extruders gewählt. Dabei kann der Steueraufwand zur Erzeugung eines flächigen Extrudat-Rohlings mittels der Ablage erheblich dadurch vermindert werden, daß der das Extrusionswerkzeug impulsfrei verlassende Extrudat-Strang in Form eines ggf. veränderliche Breite und/oder Dicke aufweisenden Bands der Ablage zugeführt werden kann. Technisch sinnvoll und leicht handhabbar ist es, daß der Extrudat-Strang mit einer Breite von etwa 100-1.400 mm und einer Dicke von 1-15 mm den Austritt des Extrusionswerkzeugs verlassen kann. Durch die Dicken- sowie Breitenoptimierung kann eine Verminderung der notwendigen Oszillationshübe zur Erzielung eines formgerechten Extrudat-Rohlings bei entsprechender Verschleißminderung der hierfür benötigten Vorrichtung erzielt werden.

Als zweckmäßige Vorrichtung zur Durchführung des Verfahrens kann als Extrusionswerkzeug eine längsgeschlitze Rohrdüse vorgesehen sein, mittels welcher der Extrudat-Strang geformt wird. Dem Austrittschlitz der Rohrdüse ist eine mindestens ein Schneideelement aufweisende Trennvorrichtung nachgeordnet, an die sich eine gesteuert oszilliert bewegbare Ablage mit Wiegevorrichtung sowie ggf. temperaturgeregelte Temperiereinrichtung anschließt, der wiederum eine beheizte Transportvorrichtung nachgeordnet ist, zum Transport mindestens einer abgemessenen Extrudat-Portion in ein oder mehrere Preßformwerkzeuge mindestens einer Presse. Durch die beheizte Transportvorrichtung wird sichergestellt, daß die Außenhaut der zum Pressformwerkzeug zu führenden Extrudat-Portion während dem Transportvorgang nicht abkühlt und dann beim Verpressen unterschiedliche Fließeigenschaften im zu verpressenden Extrudat-Rohling entstehen. Hierdurch wird eine wesentliche Verbesserung der Qualität der hergestellten Kunststoffteile erreicht.

In einer bevorzugten Ausführungsform der Vorrichtung ist vorgesehen, daß diese eine zentrale elektronische Kontroll- und Steuervorrichtung zur Regelung, Überwachung und Steuerung aufweisen kann, die alle Vorrichtungsbestandteile sowie die Pressen vollautomatisch steuern und/oder regeln sowie ggf. miteinander koordinieren kann. Vorzugsweise wird dies mittels einer speicherprogrammierbaren Steuerung sichergestellt.

Konstruktiv besonders vorteilhaft und kostensparend ist vorgesehen, daß die als Extrusionswerkzeug dienende Rohrdüse einen an den Extruder auswechselbar anflanschbaren beheizten Zylinder mit einem parallel zur Zylinderlängsachse verlaufenden mantelseitigen Austrittschlitz aufweisen kann und einen in den Zylinder ragenden, von außen lageverstellbaren, ggf. beheiztem Verdrängungskörper, der von einem Ende des Zylinders zum extruderseitigen Werkzeuganschlußflansch konisch oder parabolisch verlaufend ausgebildet ist.

Um ein Verkleben bzw. Verstopfen des Extrusionswerkzeuges zu verhindern, ist in besonders vorteilhafter Weise der Austrittsschlitz beheizt; dessen Länge kann etwa 100-1400 mm und dessen Schlitzbreite etwa 3-15 mm betragen. In einer bevorzugten Ausführungsform der Rohrdüse ist vorgesehen, daß diese eine ggf. beheizte Blende zur Einstellung der lichten Schlitzlänge und/oder -breite aufweisen kann, wodurch ein Auswechseln einzelner Rohrdüsen zur Veränderung der notwendigen Extrudat-Breite oder -Dicke auf ein Minimum reduziert werden kann. In einem konstruktiv besonders einfachen Fall kann die Blende aus verschiebbar an der Außenseite des Zylinders gehalterte Stahlmaskenelemente bestehen.

Raumsparend und konstruktiv einfach in die Vorrichtung integrierbar kann die Trennvorrichtung einen mechanisch, hydraulisch oder pneumatisch betätigbaren, durch die Wiegevorrichtung gesteuerten Hubzylinder aufweisen,der vorzugsweise parallel zum Extrusionswerkzeug verlaufend angeordnet ein längsverschiebbar geführtes Schneidemesser besitzt.

Eine andere Variante der Trennvorrichtung sieht vor, daß diese zwei parallel zueinander verlaufende, beidseitig des Austrittschlitzes angeordnete Schneidemesser besitzen kann, die zum Durchtrennen des Extrudat-Strangs schlagartig zueinander zustellbar und wiedertrennbar sind, wobei die Trennvorrichtung durch die Wiegevorrichtung gesteuert wird. Die Steuerung kann entweder direkt durch die Wiegevorrichtung oder durch die Kontroll- und Steuervorrichtung erfolgen, welche ebenfalls mit der Wiegevorrichtung gekoppelt ist.

Um ein sauberes, verklebungsfreies Durchtrennen des Extrudat-Strangs zu gewährleisten, sind zweckmäßigerweise die Schneidemesser beheizt und/oder antihaftbeschichtet.

In einer bevorzugten Ausführungsform kann als Ablage eine Waage, insbesondere eine Bandwaage vorgesehen sein, die ein antihaftbeschichtetes Endlos-Ablageband aufweisen kann, insbesondere ein PTFE-beschichtetes oder Silikon-Band, das mittels eines gesteuerten Antriebs, insbesondere mit Schritt- oder Servomotor angetriebene Rollen in zwei Richtungen bewegbar ist, wodurch ein geringerer Steuerungsaufwand zur oszillierenden Bewegung der Ablage erforderlich ist.

Zweckmäßigerweise kann die Bandwaage über einen Schnellvor- und -rücklauf verfügen, wobei die Bandgeschwindigkeit stufenlos regelbar sein kann, um eine Anpassung an die Austrittsgeschwindigkeit des Extrudat-Strangs aus der Rohrdüse sicherzustellen, welche abhängig der Materialzusammensetzung und der Beschickungsgeschwindigkeit des Extruders ist.

Ein Abkühlen des abgelegten Extrudat-Strangs wird in effektiver Art und Weise dadurch verhindert, daß in vorteilhafter weiterer Ausgestaltung die Temperiereinrichtung durch flexible, induktiv beheizbare, ggf. thermostatgesteuerte Heizbänder oder -drähte ausgebildet sein kann, die im Ablageband verlaufend angeordnet sind. Anstatt dieser oder zusätzlich hierzu können auch auf das Ablageband gerichtete Infrarot-Strahler vorgesehen sein.

Konstruktiv besonders vorteilhaft kann die Wiegevorrichtung aus einer Null-tarierbaren DMS-Wiegezellen- Anordnung bestehen, die mit dem in einem Ablagetisch aufgenommenen, die Rollen sowie das Ablegeband aufweisenden Bandführungsgestell zusammenwirkt und ggf. ein Impulsgeber für die Schneidevorrichtung besitzt, der bei Erreichen des Soll-Gewichtes des abgelegten Extrudat-Strangs den Schneidevorgang auslöst. In Weiterbildung der Ablage ist besonders vorteilhaft vorgesehen, daß das Bandführungsgestell oder der Ablagetisch quer zur Bandtransportrichtung verschiebbar gelagert sein kann und mittels eines regelbaren Antriebs, insbesondere einem Schritt- oder Servomotor, ggf. oszillierend bewegbar ist, wodurch sich gleichzeitig mehrere Extrudat-Portionen nebeneinander oder versetzt zueinander ablegen lassen oder bei Überlagerung mit der Oszillationsbewegung des Ablagebandeds beliebige Konturen zur Erzeugung eines speziell geformten Extrudat-Rohlings gesteuert abfahren lassen.

Bei einer Vorrichtung mit einer mindestens ein antihaftbeschichtetes Endlos-Transportband mit zugehörigem Antrieb aufweisenden Transportvorrichtung sowie mindestens einer Presse kann in vorteilhafter Weise mindestens ein das Transportband aufwiesender Transporttisch vorgesehen sein, der zwischen einer an die Bandwaage anschließenden Aufnahmestellung und mindestens einer Beschickungsstellung motorisch verfahrbar ist, in der eine örtlich gezielte Beschickung des geöffneten Preßformwerkzeugs gegeben ist, wodurch eine variable und anpaßbare Transportvorrichtung ausgebildet ist.

Kostensparend kann in einer bevorzugten Ausführungform die Transportvorrichtung modulartig aufgebaut mindestens zwei Transporttische aufweisen, die abwechselnd in Aufnahmestellung an die Bandwaage und bei Beladung mit mindestens einer Extrudat-Portion gezielt nacheinander in eine Beschickungsstellung an mindestens eine Presse gesteuert verfahrbar sind, in der mindestens eine Beschickungsmulde oder ein Teilbereich hiervon mindestens eines Preßformwerkzeugs mit mindestens einer Extrudat-Portion beschickbar ist, wodurch sich erheblich kürzere Beschickungsraten der Pressen erzielen lassen. Hierdurch können bspw. mehrere Extrudat-Portionen entweder örtlich gezielt in verschiedene Zonen einer Beschickungsmulde oder je eine Extrudat-Portion in eine oder mehrere Beschickungsmulden eines Preßformwerkzeugs abgelegt werden, ohne den Transporttisch jedesmal in Aufnahmestellung zur Aufnahme einer Extrudat-Portion zu verfahren und anschließend gesteuert wieder an die jeweilige spezifische Beschickungsstellung zu verfahren.

Zweckmäßigerweise sind die Bandgeschwindigkeiten des in Aufnahmestellung befindlichen Transporttisches und die des Ablagebandes der Bandwaage zur dehnungsfreien Übernahme der Extrudat-Portionen synchronisierbar.

Handhabungsmäßig besonders vorteilhaft und konstruktiv einfach kann der Transporttisch ein das Transportband aufnehmendes Bandführungsgestell aufweisen, das auf dem Transporttisch motorisch verschiebbar geführt und ggf. zum unteren Preßtisch hin ausrichtbar, insbesondere kippbar ist, so daß mindestens der Endbereich des Transportbands an oder über das zu beschickende Preßformwerkzeug teleskopartig zur gezielten Beschickung zustellbar und zurückziehbar ist, wodurch die Beschickungsmulde im Preßformwerkzeug optimal beschickt werden kann. Zweckmäßigerweise können der Antrieb des Bandführungsgestells und der Antrieb des Transportbandes synchronisierbar sein, so daß ein Wiedereinfahren des Bandführungsgestells bei gleichzeitiger Beschickungsbewegung des Transportbandes zum exakten Ablegen des/der Extrudat-Portion/en im Preßformwerkzeug erfolgt, wodurch die Kontur der Extrudat-Portion/en beim Einbringen in die jeweilige Beschickungsmulde erhalten bleibt.

Bei einer Vorrichtung mit einer Konditioniervorrichtung zur Temperierung/Beheizung der in der Transportvorrichtung befindlichen Extrudat-Portion/en kann in einer bevorzugten Ausführungsform die Konditioniervorrichtung durch eine über den in Aufnahmestellung befindlichen Transporttisch ortsfest angeordnete, motorisch auf- und abfahrbar gehaltene Isolierhaube mit geregelt beheizbarem Innenraum ausgebildet sein; die Beheizung erfolgt insbesondere durch Heizplatten oder Heizstrahler und ist vorzugsweise thermostatgeregelt.

Eine Variante sieht vor, daß jeder Transporttisch eine solche Isolierhaube aufweisen kann, die mittels einer Aufhängung über dem Transportband motorisch auf- und abfahrbar gehalten sein kann, so daß eine Temperierung der aufgenommenen Extrudat-Portionen auch während dem Verfahren des Transporttisches in die jeweilige Beschickungsstellung gegeben ist.

In weiterer Ausgestaltung der Vorrichtung kann zweckmäßigerweise an dem der Transportvorrichtung gegenüberliegenden Ende der Bandwaage ein motorisch angetriebenes Entsorgungsband mit anschließender Extrudat-Regenrationsvorrichtung, insbesondere eine Kunststoffzerkleinerungs-Einrichtung vorgesehen sein, mittels der fehlerhaft hergestellte Extrudat-Portionen schon nach dem Ablegevorgang ausgeschieden und zu einem späteren Zeitpunkt wieder dem Extrusions-Vorgang zugeleitet werden können, wodurch sich der Ausschuß fehlerhafter Kunststoffpreßteile schon vor dem Preßvorgang senken läßt und zusätzliche Energie eingespart wird.

In weiterer Ausgestaltung der Vorrichtung mit einer der/den Presse/n nachgeordneten Entnahmevorrichtung zum Weitertransport und/oder Entnahme der gepressten Kunststoffteile aus dem Preßformwerkzeug kann in der Entnahmevorrichtung ein vorzugsweise einen rotatorischen und zwei translatorische Bewegungsfreiheitsgrade aufweisender, motorisch angetriebener Entnahmegreifer vorgesehen sein, der in das geöffnete Preßformwerkzeug zur gezielten Entnahme des Kunststoffteils, insbesondere mittels einer Vakuumansaug-Einrichtung einfahr- und zurückziehbar ist, so daß ein manuelles Entnehmen der noch heißen Kunststoff-Preßteile durch eine Bedienungsperson entfällt. In Weiterbildung der Entnahmevorrichtung kann zur gezielten Entnahme der Kunststoff-Preßteile in konstruktiv einfacher Art und Weise ein Entnahmeband vorgesehen sein, das in das geöffnete Preßformwerkzeug motorisch ein- und ausfahrbar ausgebildet sein kann, auf dessen um motorisch angetriebene Rollen umlaufenden, ggf. antihaftbeschichtetem Endlosband das gepresste Kunststoffteil nach Auswurf aus dem Preßformwerkzeug aufnehmbar und weitertransportierbar ist.

Weitere Einzelheiten der Erfindung sind den Unteransprüchen und der folgenden Beschreibung zu entnehmen in der die Erfindung anhand eines in den beigefügten Zeichnungen dargestellten Ausführungsbeispiels näher beschrieben und erläutert ist. Es zeigen:
- Figur 1: eine schematische Seitenansicht einer Fertigungsstraße zum Herstellen und Verpressen von Recycling-Kunststoff-Extrudaten gemäß Pfeil I aus Fig. 2;
- Figur 2: eine Draufsicht gemäß Pfeil II der in Figur 1 gezeigten Anlage;
- Figur 3: einen Längsschnitt durch eine Rohrdüse zur Verwendung als Extrusionswerkzeug in der in Figur 1 gezeigten Anlage;
- Figur 4: eine schematische Darstellung verschiedener, auf dem Transportband angeordneter Extrudat-Rohlinge, die entsprechend mehrerer zu fertigenden Preßkunststoffteile unterschiedliche geometrische Formen aufweisen.
- Figur 5: eine schematische isometrische Darstellung eines Extrudat-Rohlings in einer weiteren Ausführungskonfektionierung.

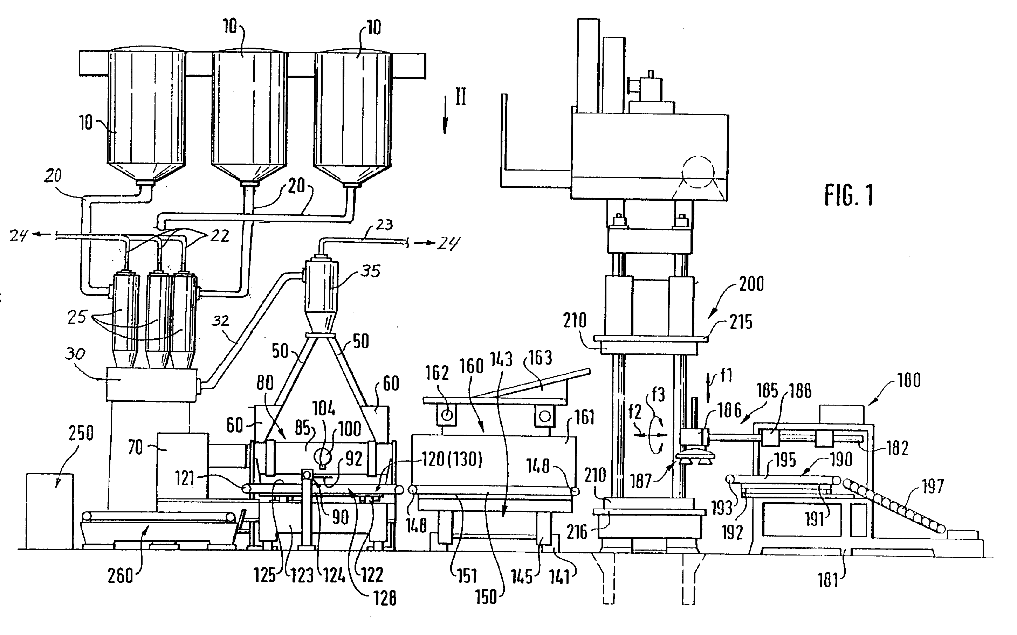

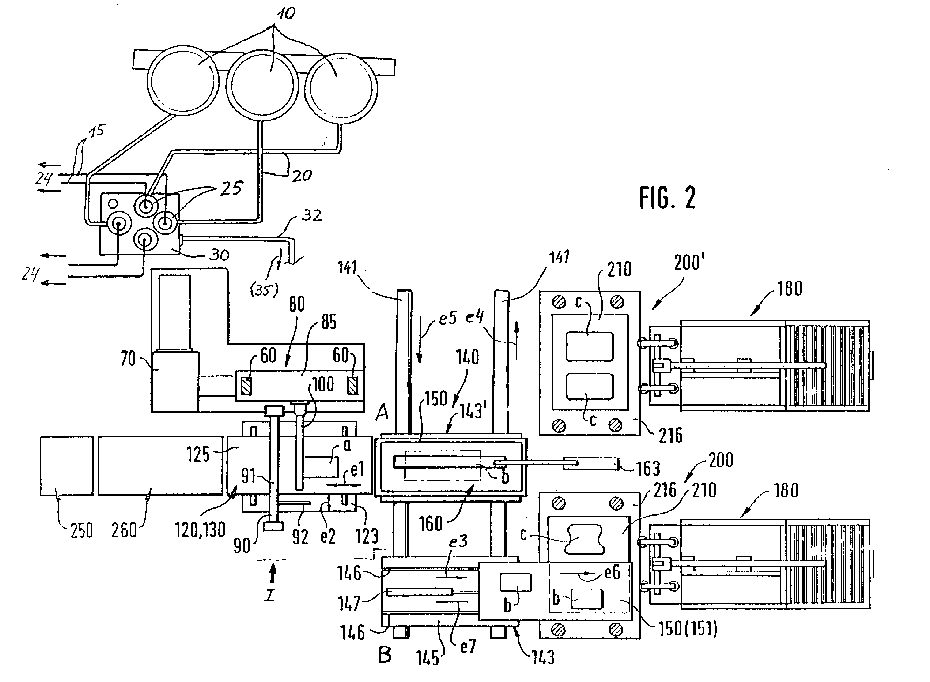

In Figur 1 und 2 ist in einer schematischen Darstellung eine Anlage zur Herstellung von insbesondere flächigen Kunststoffpreßteilen aus einem Recycling-Kunststoffextrudat-Gemisch gezeigt.

Die Anlage weist Vorratsbehälter 10 auf, in welchen rieselfähig zerkleinerte Recycling-Kunststoffe gebunkert sind, vorzugsweise unterschiedliche sortenreine Altkunststoffe, die bspw. bei anderen Verarbeitungsprozessen als Abfall angefallen sind oder Kunststoff-Granulat-Gemische verschiedenster Zusammensetzung, unter Umständen mit Füllstoffen wie Aluminiumspäne und dgl. Über Förderleitungen 20 wird das Material aus den einzelnen Behältern 10 jeweils mit Staubfiltern ausgestatteten Fördergeräten 25 zugeführt, die über Saugleitungen 22 jeweils mit einem nicht dargestellten Antrieb 24 in Form von Hochleistungsgebläsen verbunden sind (Saugförderung). Von den Fördergeräten 25 gelangt das Kunststoff-Granulat-Gemisch in eine Mischvorrichtung 30, in der die Kunststoffgranulate in vorgegebenem Verhältnis zueinander, ggf. unter Beimischung eines reinen Thermoplasten vermischt werden, und von der aus über eine weitere Förderleitung 32 das Granulat einem Extruderfördergerät 35 zugeleitet wird, welches seinerseits von einer weiteren Saugleitung 23 von dem zugehörendem Antrieb 24 betrieben wird, und über den mittels zweier Beschickungsleitungen 50 die Trichter 60 eines zweiseitig beschickbaren Extruders 80 versorgt werden, dessen Antrieb 70 eine gegenläufige Schnecke stirnseitig antreibt. Im Extruder 80 wird das Granulat-Gemisch innig miteinander vermengt und aufgrund der Extruderbauart bei nur geringer Wärmebelastung in erforderlicher Weise plastifiziert sowie ggf. entgast. An den Extruder 80 ist längsmittig des Extruderzylinders 85 ein beheizbares, speziell ausgebildetes Extrusionswerkzeug 100 angeflanscht, das anhand von Figur 5 nachfolgend näher beschrieben werden soll.

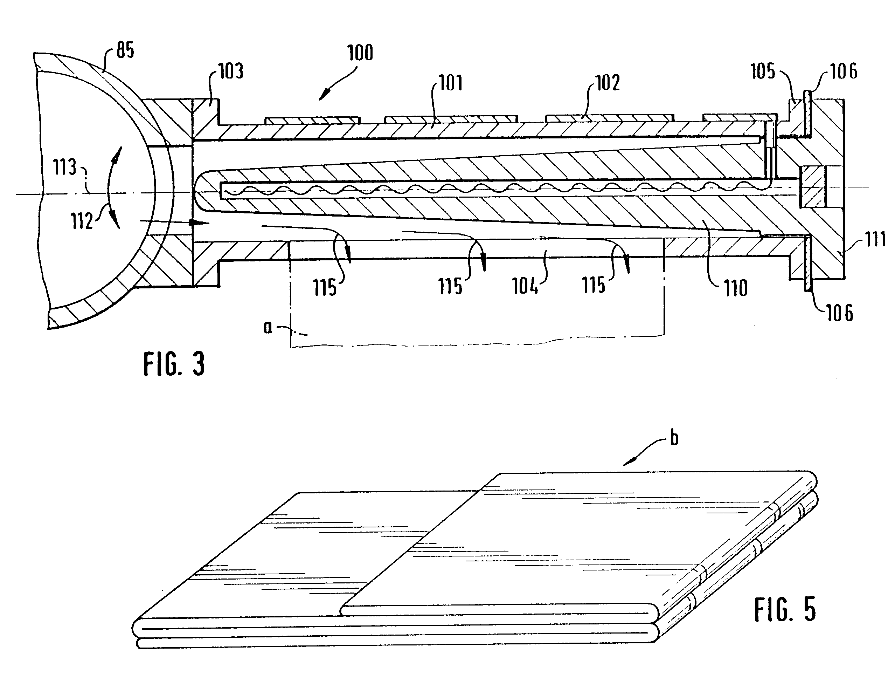

Das in Figur 3 gezeigte Extrusionswerkzeug 100 wird als Rohrdüse bezeichnet und besteht aus einem bspw. mittels Heiz- und Kühlbändern 102 geregelt beheizbaren Zylinder 101, der über einen extruderseitigen Werkzeuganschlußflansch 103 mit dem Extruderzylinder 85 auswechselbar befestigt ist und einen parallel zur Zylinderlängsachse verlaufenden mantelseitigen Austrittschlitz 104 aufweist. Am entgegengesetzten Längsende des Zylinders 101 ist an einem Anschlußflansch 105 ein ggf. beheizbarer, in den Zylinderinnenraum weisender, koaxial zur Zylinderlängsachse ausgerichteter, lageverstellbarer Verdrängungskörper 110 mittels seinem Befestigungsflansch 111 befestigt. Der Verdrängungskörper 110 ist von seinem strinseitigen Befestigungsflansch 111 zum extruderseitigen Werkzeuganschlußflansch 103 konisch oder parabolisch zulaufend ausgebildet, um längs dem Schlitz 104 einen konstanten Austrittsdruck für die Kunststoff-Extrudat-Masse zu erzeugen.

Durch Veränderung der Neigung gemäß Pfeil 112 bezüglich der Längsachse 113 des Verdrängungskörpers 110, bspw. mittels zwischen den Flanschen 105,111 angeordneten Ausgleichs-Verstellplättchen 106 wird erreicht, daß die durch den Schlitz 104 gemäß Pfeilen 115 die Rohrdüse verlassende Kunststoff-Extrudatmasse für beliebige Materialzusammensetzung an jeder Stelle eine einheitliche Austrittsgeschwindigkeit besitzt, so daß ein Extrudat-Strang (a) geformt wird, der eine gleichmäßige, keinerlei Verwerfungen aufweisende bandförmige Gestalt besitzt. Die Rohrdüse kann mit einem Austrittschlitz 104 in einer Länge zwischen 300 und 1400 mm versehen sein, wobei die Schlitzbreite ebenfalls je nach gewünschtem Bandquerschnitt und abhängig vom Extrusionsmaterial 1 bis 15 mm betragen kann. Die Austrittschlitzlänge kann aber auch im Extremfall nur 100 mm betragen. Die dargestellte Rohrdüse arbeitet nach einem anderen Prinzip als eine Breitschlitzdüse und kann daher mit einer solchen nur bedingt verglichen werden. Eine nicht gezeigte Ausführungsvariante sieht eine ggf. beheizte Blende im Bereich des Austrittsschlitzes 104 der Rohrdüse vor, so daß ausgehend von einem Schlitz 104 der Länge 1400 mm und Breite von 15 mm die lichte Schlitzlänge und/oder -breite veränderlich einstellbar ist.

Wie in Figur 1 und 2 weiter gezeigt, ist dem Extrusionswerkzeug 100 im Bereich des Austrittsschlitzes 104 eine Trennvorrichtung 90 nachgeordnet, die einen mechanisch, hydraulisch oder pneumatisch betriebenen und gesteuert betätigbaren Langhubzylinder 91 aufweist, der im vorliegenden Fall parallel zum Extrusionswerkzeug 100 verlaufend angeordnet ist und ein darin längs verschiebbar geführtes Schneidemesser 92 zum Durchtrennen des den Austrittsschlitz 104 des Extrusionswerkzeugs 100 verlassenden Kunststoff-Strangs (a). Bei einer nicht gezeigten Ausführungsvariante weist die Trennvorrichtung 90 zwei parallel zueinander verlaufende, beidseitig des Austrittsschlitzes 104 angeordnete Schneidemesser 92 auf, die zum Durchtrennen des Extrudat-Strangs (a) schlagartig zueinander zustellbar und voneinander trennbar sind. Die Schneidemesser 92 sind antihaftbeschichtet, um ein Verkleben mit dem Kunststoff-Extrudat zu verhindern.

Zur Aufnahme des Extrudat-strangs (a) ist als Ablage 120 eine Bandwaage mit integrierter Wiegevorrichtung 130 vorgesehen. Die Bandwaage weist ein antihaftbeschichtetes Endlos-Ablageband 125 auf, welches über einen Antrieb 121 in Form von schrittmotorangetriebenen Rollen in zwei Richtungen oszillierend hin- und her elektronisch gesteuert bewegbar ist, so daß der Extrudat-Strang (a) mäanderartig aufeinander gelegt werden kann. Die Bandwaage verfügt über einen Schnellvor- und -rücklauf, wobei die Bandgeschwindigkeit stufenlos regelbar ist und insbesondere in Abhängigkeit des Materialdurchsatzes im Extruder 80 gleich der Austrittsgeschwindigkeit des Extrudat-Strangs (a) aus dem Extrusionswerkzeug 100 einstellbar ist. Im gezeigten Ausführungsbeispiel ist das Bandführungsgestell 124 des Ablagebandes 125 quer zur Bandtransportrichtung, d.h. in Schlitzlängenrichtung der Rohrdüse verschiebbar auf einem Ablagetisch 123 gelagert und über einen Schlittenantrieb 122 mit elektronisch gesteuertem Schrittmotor ggf. ebenfalls oszillierend verfahrbar, so daß der Extrudat-Strang (a) mänderartig nebeneinander ablegbar ist, oder, falls der Extrudat-Strang (a) zuvor durchtrennt wurde, ein zweiter Extrudat-Strang (a) neben, vor oder hinter dem ersten ablegbar ist. Die Abmessungen des Ablagebundes 125 richten sich nach der aufzunehmenden Extrudat-Portionsgröße sowie Anzahl und betragen im Ausführungsbeispiel ungefähr 700mm Breite x 2000mm Länge, wobei Breiten bis zu 1500mm bei Verwendung von Rohrdüsen mit einer Schlitzlänge von 1400mm und Längen bis zu 3000mm verwirklichbar sind.

Ein Erstarren des abgelegten Extrudat-Strangs (a) auf der Ablage 120 während oder nach dem Ablegevorgang wird durch eine Temperiereinrichtung 128 verhindert, die aus flexiblen, induktiv beheizbaren thermostatgesteuerten Heizbändern oder -drähten besteht, die im Ablageband 125 verlaufend angeordnet sind. Eine nicht gezeigte Ausführungsform der Temperiereinrichtung 128 weist zusätzlich oder anstatt der Heizbänder Strahler, insbesondere Infrarot-Strahler auf, die zum Ablageband 125 gerichtet sind, so daß die Oberflächentemperatur des abgelegten Extrudat-Strangs (a) konstant hoch bleibt und eine zur Hautbildung führende Abkühlung weitestgehend verhindert wird.

Die Wiegevorrichtung 130 besteht aus einer Null-tarierbaren DMS-Wiegezellen-Anordnung zur Gewichtserfassung des abgelegten Extrudat-Strangs (a) und weist einen Impulsgeber zur Steuerung/Auslösung der Trennvorrichtung 90 auf.

Zur Steuerung und Regelung sowie Überwachung des Antriebes 121 der Bandwaage sowie des Schlittenantriebs 122 des Bandführungsgestells 124 ist eine in den Figuren nicht dargestellt zentrale Kontroll- und Steuervorrichtung, insbesondere eine speicher-programmierbare Steuerung (SPS) vorgesehen, die ferner mit der Wiegevorrichtung 130 zur Einstellung und Überwachung sowie mit der Tennvorrichtung 90 gekoppelt ist.

Wie in Figur 1, insbesondere aber in Figur 2 weiter gezeigt ist, ist der Ablage 120 eine Transportvorrichtung 140 unmittelbar nachgeordnet, mittels welcher der zuvor in Extrudat-Portionen (b) vorgegebenen Gewichts und Maßen abgelegte und anschließend zerteilte Extrudat-Strang (a) wahlweise örtlich gezielt in das geöffnete Preßformwerkzeug 210 einer von zwei nach der Transportvorrichtung 140 angeordneten Pressen 200,200′ beschickt werden kann.

Die Transportvorrichtung 140 weist im gezeigten Ausführungsbeispiel zwei Transporttische 143,143′ auf, die auf Schienen 141 mittels einer nicht gezeigten Antriebsvorrichtung abwechselnd zwischen einer an die Bandwaage (Ablage 120) anschließenden Aufnahmestellung (A) und mindestens einer Beschickungsstellung (B) elektronisch gesteuert motorisch verfahrbar sind, in der die örtlich gezielte Beschickung des geöffneten Preßformwerkzeugs 210 einer der Pressen (200, 200′) mit Extrudat-Portionen (b) möglich ist.

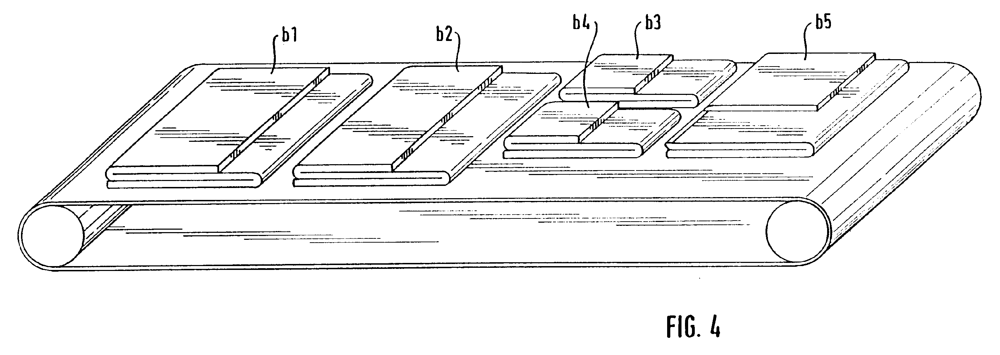

Der Transporttisch 143,143′ weist ein antihaftbeschichtetes Endlos-Transportband 150 mit zugehörigem Antrieb 148, insbesondere in Form von schrittmotorangetriebenen Rollen auf, die in einem aufnehmenden Bandführungsgestell 151 angeordnet sind, das auf dem verfahrbaren Tischgestell 145 des Transporttisches 143,143′ mittels einer Führung 146 und einem pneumatisch, hydraulisch oder mechanisch betätigbaren Antrieb 147 in Form eines Zustellzylinders, ggf. zum unteren Preßtisch 216 hin ausrichtbar, insbesondere kippbar ausfahrbar ist, so daß mindestens der Endbereich des Transportbandes 150 zur gezielten Beschickung an oder über das Preßformwerkzeug 210 teleskopartig zustellbar und zurückziehbar ist. Das Transportband 150 und das Ablageband 125 sind mit ihren zugehörenden Antrieben 148 bzw. 121 aus Rationalisierungsgründen in ihrer technischen Konzeption ähnlich aufgebaut. Die Abmessungen des Transportbandes 150 sind entsprechend der Möglichkeit zur Aufnahme mehrerer Extrudat-Portionen (6), wie dies auch in Figur 4 gezeigt ist, festgelegt. Sie können denjenigen des Ablagebandes 125 entsprechen.

Die Steuerung und Regelung sowie Überwachung der Stellung der einzelnen Transportvorrichtungsbestandteile wird unter Benützung von Sensoren durch die Kontroll- und Steuervorrichtung (SPS) vorgenommen, wobei insbesondere die Bandgeschwindigkeit des Transportbandes 150 und des Ablagebandes 125 der Bandwaage synchronisierbar sind, um eine reibungs- und dehnungslose Übernahme der Extrudat-Portion/en (b) von der Ablage 120 in die Transportvorrichtung 140 zu gewährleisten. Ferner sind der Zustellzylinder 147 des Bandführungsgestells 151 und der Antrieb 148 des Transportbandes 150 durch die Kontroll- und Steuervorrichtung (SPS) so synchronisierbar, daß ein Wiedereinfahren des Bandführungsgestells 151 bei gleichzeitiger Beschickungsbewegung, d.h. Vorwärtsbewegung des Transportbandes 150 zum exakten Ablegen des/der Extrudat-Portion/en (b) im Preßformwerkzeug 210 erfolgt. Der Transporttisch 143 kann hierbei gleichzeitig mehrere Extrudat-Portionen (b) auf dessen Transportband 150 verteilt aufnehmen, so daß verschiedenartige, d.h. verschiedene geometrische Abmessungen und Gewichte aufweisende Extrudat-Portionen (b) ohne einen Haufen zu bilden gezielt in eine jeweils aufnehmende Beschickungsmulde (c) - oder mehreren Bereichen einer solchen - des unteren Preßformwerkzeugs 210 einbringbar sind.

Der Transportvorrichtung 140 ist eine Konditioniervorrichtung 160 zur Temperierung/Beheizung der Extrudat-Portion/en (b) zugeordnet. Diese besteht aus einer über den in Aufnahmestellung (A) befindlichen Transporttisch 143 ortsfest angeordnete Isolierhaube 161 aus einem wärmedämmenden Material mit elektronisch geregelt beheizbarem Innenraum, die mittels einer Hebevorrichtung 165 auf- und abfahrbar an einem Kragarmständer 166 gehalten ist. Zur Temperierung/Beheizung dient eine in der Isolierhaube 161 integrierte thermostatgeregelte Heizplatte oder ein Infrarot-Heizstrahler. Eine andere Ausführungsvariante der Konditioniervorrichtung 160 sieht ebenfalls eine Isolierhaube 161 vor, die mittels einer Aufhängung über dem Transportband 150 ebenfalls motorisch auf- und abfahrbar gehalten ist, welche aber jedem einzelnen Transporttisch 143 zugeordnet ist, und mit diesem verfahren werden kann. Die Zustellung, d.h. das Auf- und Abfahren erfolgt über die Steuer- und Kontrollvorrichtung (SPS), welche auch die Thermostatsteuerung übernimmt/überwacht.

An dem der Transportvorrichtung 140 gegenüberliegenden Ende der Bandwaage (Ablage 120) ist ein elektronisch gesteuert motorisch angetriebenes Entsorgungsband 260 mit anschließender Extrudat-Regenerationsvorrichtung 250, insbesondere in Form einer Heiß-Granulatmühle vorgesehen.

Zur optimalen Ausformung der Kunststoffteile sind kombinierte Hydraulik-Druckspeicherpressen 200,200′ vorgesehen, die einen beheizten, gekühlten oder kombinierten Betrieb ermöglichen und von der Kontroll- und Steuervorrichtung (SPS) gesteuert und überwacht werden.

Den Pressen 200,200′ ist eine ebenfalls durch die Kontroll- und Steuervorrichtung (SPS) elektronisch gesteuerte Entnahmevorrichtung 180 zum Weitertransport und/oder Entnehmen der gepressten Kunststoffteile aus dem Preßformwerkzeug 210 nachgeordnet. Diese weit je einen den Pressen 200, 200′ zuordenbaren Entnahmegreifer 185 auf, welcher an einem Gestell 181 mittels einer Zustellschiene 182 geführt über einen elektronisch gesteuerten Zustellantrieb 188 in die geöffnete Presse 200,200′ einfahr- und zurückziehbar (Dppelpfeil f₂) ist. Der Entnahmegreifer 185 weist einen Greiferkopf 186 auf, der um die Zustellachse drehbar (Doppelpfeil f₃) ist, und der eine vertikal verfahrbare (Doppelpfeil f₁) Vakuumansaug-Einrichtung 187 aufweist, mittels der eine gezielte Entnahme der fertig gepressten Kunststoffteile aus den am oberen und unteren Preßtisch 215,216 befestigten Preßformwerkzeughälften 210 möglich ist.

Im Gestell 181 unterhalb jeden Entnahmegreifers 185 angeordnet befindet sich ein Entnahmeband 190. Dieses besteht aus einem antihaft-beschichteten Endlos-Band 195 mit zugehörigem elektronisch gesteuertem Antrieb 193 in Form von schrittmotorangetriebenen Rollen, welche in einem Bandführungsgestell 191 aufgenommen sind, das verfahrbar gelagert im Gestell 181 angeordnet mittels eines Zustellantriebs 192 in die geöffnete Presse 200,200′ ein- und ausfahrbar ist. Hierdurch kann das gepreßte Kunststoffteil nach Auswurf aus dem Preßformwerkzeug 210 aufgenommen werden und an eine Förderrollenanordnung 197 zur Entnahme oder zum Weitertransport bspw. in ein Lager zugeführt werden.

Das Beschickungs-Verfahren soll anhand der Funktionsweise der beschriebenen Vorrichtung erläutert werden: Der zu verarbeitende Recycling-Kunststoff, ein Gemisch aus sortenreinen oder nicht sortenreinen Kunststoffen, die zur Rieselfähigkeit zerkleinert sind, werden aus den Vorratsbehältern 10 unter ggf. Beimischung eines Thermoplasten als Bindemittel über die Förderleitungen 20 den jeweiligen Fördergeräten 25 und von dort aus der Mischvorrichtung 30 zugeführt, in welcher eine Vermischung nach Gewichts- oder Volumenanteilen entsprechend einer gewünschten Kunststoffzusammensetzung, ggf. durch die Kontroll- und Steuervorrichtung (SPS) geregelt stattfindet. Das zu verarbeitende Kunststoff-Granulatgemisch wird anschließend über eine Förderleitung 32 dem Fördergerät 35 zugeführt, von wo aus über Beschickungsleitungen die Trichter 60 des Extruders 80 beschickt werden. Im Extruder 80 wird das Granulat unter Erwärmung innig vermischt und bei nur kurzzeitiger Wärmebelastung plastifiziert und zusätzlich entgast der an den Extruder 80 angeflanschten Rohrdüse 100 zugeführt wird.

Der den beheizten Austrittschlitz 104 des Extrusionswerkzeugs 100 (Rohrdüse) in Form einer zähen Kunststoffmasse verlassende Extrudat-Strang (a) wird auf das temperierte und mittels der Kontroll- und Steuervorrichtung (SPS) gesteuert oszillierend bewegbare Ablageband 125 der Bandwaage mäanderartig aufeinander abgelegt. Die Ablagegrundfläche entspricht dabei in etwa der Beschickungsfläche des im Preßformwerkzeug 210 zu formenden Kunststoffteils oder einer Teilfläche davon und dessen gewünschter Preßmassenverteilung, insbesondere der örtlichen Dicke des Kunststoffteils. Dies wird erreicht, indem mittels der Kontroll- und Steuervorrichtung (SPS) der Antrieb 121 der Bandwaage so angesteuert wird, daß zum einen die Bandgeschwindigkeit entsprechend der Austrittsgeschwindigkeit des Kunststoff-Strangs (a) eingestellt wird und zum anderen der Oszillationshub des Ablegebandes 125, d.h. der Fahrweg, während eines Hubs abhängig der jeweils erforderlichen Lagenlänge, d.h. der örtlich aufzubauenden Dicke in der entstehenden Extrudat-Portion (b) verändert wird.

Möglich ist auch, eine überlagerte Oszillationsbewegung gemäß Dppelpfeil el des Ablagebandes 125 und des Bandführungsgestells 124 gemäß Doppelpfeil e2 bei ggf. gleichzeitiger Veränderung beider Oszillationshübe um eine zusammenhängende, beschickungsmuldenkontur-aufweisende Extrudat-Portion (b) zu erhalten, deren Extrudat-Strangbahnen neben und/oder aufeinander mäanderartig abgelegt sind. Andererseits können auch mehrere getrennte Extrudat-Portionen (b) auf dem Ablageband 125 neben- oder hintereinander abgelegt werden.

Das Gewicht des auf der Ablage 120 abgelegten Extrudat-Strangs (a) wird mittels der Wiegevorrichtung 130 erfaßt, so daß, wenn ein vorbestimmter, abhängig des fertigen Kunststoffteils vorgegebener Soll-Wert erreicht ist, ein Signal an die Trennvorrichtung 90 zum Durchtrennen des Extrudat-Strangs (a) erfolgt; hiernach wird das Gewicht der abgelegten Extrudat-Portion (b) erneut gemessen.

Bei Abweichung des Gewichts um einen vorbestimmten Toleranzbetrag erfolgt eine selbständige Korrektur des Soll-Wertes oder die Einstellung eines temporären Soll-Wertes in der Kontroll- und Steuervorrichtung (SPS) und die abgelegte Extrudat-Portion (b) wird dadurch aus dem Beschickungs-Vorgang ausgeschieden, in dem diese an das Entsorgungsband 260 zugeführt wird, an das sich die Extrudat-Regenerationsvorrichtung (Heiß-Granulatmühle) 250 anschließt, in welcher eine Abkühlung und Zerkleinerung des Kunststoff-Extrudats stattfindet, so daß dieses wiederum dem Extrusionsvorgang zugeleitet werden kann.

Bei Übereinstimmung des Soll-Wertes mit dem Ist-Gewicht der Extrudat-Portion (b) erfolgt ein Signal zum Weitertransport des Ablegebandes 125 und Einschalten des Transportbandes 150 des hieran anschließend in Aufnahmestellung A befindlichen Transporttisches 143, wodurch die Extrudat-Portion (b) durch die Transportvorrichtung 140 aufgenommen wird. Auf dem Transporttisch 143 können mehrere Extrudat-Portionen (b) aufgenommen und zwischengespeichert werden, wobei die Anzahl und Anordnung der Extrudat-Potion (b) auf dem Transportband 150 abhängig davon ist, ob und inwieweit eine oder mehrere Beschickungsmulden (c) eines oder mehrerer Preßformwerkzeuge 210 einer oder mehrerer Pressen 200,200′ örtlich gezielt beschickt werden sollen. Eine solche Anordnung verschiedenartig konfektionierter Extrudat-Portionen (b1-b5) ist bspw. in Figur 4 gezeigt. Um ein Abkühlen der Extrudat-Portionen (b) während dem Zwischenspeichern zu verhindern, wird die Isolierhaube 161 der Konditioniervorrichtung 160 über das Transportband 150 des in Aufnahmestellung A befindlichen Transporttisches 143 abgesenkt.

Wie insbesondere der Figur 2 zu entnehmen ist, kann jeweils abwechselnd einer der zwei vorgesehenen Transporttische 143,143′ gemäß den Pfeilen e4 und e5 in die Aufnahmestellung A und deren jeweilige Beschickungsstellung B gesteuert verfahren werden. In der Beschickungsstellung B, in der sich momentan der Transporttisch 143′ befindet, wird zur örtlich gezielten Beschickung der Beschickungsmulde (c) des geöffneten Preßformwerkzeugs 210 mit den auf dem Transportband 150 abgelegten Extrudat-Portionen (b) das Bandführungsgestell 151 teleskopartig gemäß Pfeil e3 ausgefahren und ggf. zum unteren Preßtisch 216 hin geneigt. Anschließend erfolgt bei gleichzeitiger Beschickungsbewegung gemäß Pfeil e6 des Transportbandes 150 ein synchronisiertes Wiedereinfahren des Bandführungsgestells gemäß Pfeil e7, so daß ein exaktes Ablegen des/der Extrudat-Portion/en (b) in der jeweiligen Beschickungsmulde (c) ohne "Haufenbildung" erfolgt.

Nach erfolgtem Preßvorgang wird das fertige Kunststoffteil mittels des Entnahmegreifers 185 und der Vakuumansaugeinrichtung 187 der Entnahmevorrichtung 180 aus der oberen oder unteren Preßformwerkzeughälfte 210 entnommen und auf dem Entnahmeband 190 abgelegt, wo ein Weitertransport an die Förderrollenanordnung 197 zum Weitertransport des fertigen Kunststoffteils oder zur Entnahme erfolgt. Das Entnahmeband 190 kann aber auch in das geöffnete Preßformwerkzeug 210 teleskopartig eingefahren werden, so daß an der oberen Preßformwerkzeughälfte hängende Kunststoffteile, nach deren Auswurf darauf aufgenommen und nach Wiedereinfahren der Förderrollenanordnung 197 weitergeleitet werden können.

Somit ist ein Verfahren angegeben, bei dem abhängig der Anzahl der Oszillationshübe des Ablagebandes 125 der Bandwaage, des Oszillationshubes einer Oszillation, sowie der Länge und Breite des Austrittsschlitzes 104 der Rohrdüse und ggf. auch der Oszillation des Ablageband-Führungsgestells 124, ein flächiger, örtlich unterschiedliche Dickenverteilung aufweisendener Extrudat-Rohling (Extrudat-Portion (b)) erzeugt werden kann, der anschließend im Preßformwerkzeug 210 zum fertigen Kunststoffteil unter weitestgehender Materialausnutzung und ohne Preßabfälle verpressbar ist. Ein solcher Extrudatrohling ist bspw. in Figur 5 gezeigt. Durch dieses Verfahren ist eine Konfektionierung des Extrudat-Rohlings bereits bei dessen Formgebung beim Extrudieren und Portionieren abhängig der späteren Kunststoffteil-Endform gegeben. Ein weiterer Vorteil, den ein so gebildeter Extrudat-Rohling aufweist, ist die verlustenergiearme Temperaturverteilung über dem Extrudatlagenquerschnitt. Aufgrund der flächigen Formgebung der Extrudat-Portion (b) treten beim Pressen von flächigen Teilen geringere Scherkräfte auf, da ein geringerer Fließweg zum Ausfüllen der Beschickungsmulde (c) des Preßformwerkzeugs 210 gegeben ist, was nahezu ein Ausbleiben von Eigenspannungen im fertigen Kunststoffteil aufgrund von "eingefrorenen" Scherkräften zur Folge hat. Die kürzeren Fließwege haben auch reduzierte Preßkräfte zur Folge, wodurch eine weitere Energieeinsparung beim Preßvorgang gegeben ist. Mit einem solchen Extrudat-Rohling oder mehreren Teil-Rohlingen lassen sich flächenhafte Kunststoffteile bspw. mit Außenabmessungen von bis zu 2600 x 1400 x 20 mm und einem Gewicht von etwa 160kg herstellen.

Aufgrund der modulartigen Bauweise der gezeigten Vorrichtung können Anlagen zusammengestellt werden, die einen oder mehrere Extruder mit der zugehörigen Ablage sowie einer ggf. mehrere Transporttische aufweisende Transportvorrichtung, mittels welchen sich eine entsprechende oder gar größere Anzahl Pressen mit den geformten Extrudat-Rohlingen (Extrudat-Portionen) beschicken lassen.

## Patentansprüche

1. Verfahren zur Beschickung eines Preßformwerkzeugs (210) mit extrudiertem Kunststoff, insbesondere unter Verwendung von rieselfähig zerkleinerten Recycling-Kunststoffen, die in einem vorgegebenen Mischungsverhältnis ggf. unter Beimischung eines Thermoplasten als Bindemittel einem Extruder (80) zugeführt, unter Erwärmung und ggf. Entgasung innig vermischt, durch den Austritt (104) eines beheizten Extrusionswerkzeugs (100) extrudiert und in abgemessenen Extrudat-Portionen (b) unter Verwendung einer beheizten Transportvorrichtung (140) einem Preßformwerkzeug (210) zugeführt werden, **dadurch gekennzeichnet,** daß der das Extrusionswerkzeug (100) verlassende Extrudat-Strang (a) auf einer temperierten und gesteuert oszillierend bewegbaren Ablage (120) mäanderartig neben und/oder aufeinander abgelegt wird und zwar auf einer Grundfläche, die etwa der Beschickungsfläche des im Preßformwerkzeug (210) zu formenden Kunststoffteils oder einer Teilfläche davon und dessen gewünschter Preßmassenverteilung entspricht und bei Erreichen einer vorgegebenen Extrudat-Portionsgröße abgetrennt wird, wobei ggf. mehrere Extrudat-Portionen (b) auf der Ablage (120) abgelegt und der Transportvorrichtung (140) zugeführt werden, daß das Gewicht des auf der Ablage (120) abgelegten Extrudat-Strangs (a) erfaßt und bei Erreichen eines vorbestimmten Soll-Wertes ein Signal an eine Trennvorrichtung (90) zum Durchtrennen des Extrudat-Strangs (a) erfolgt, wonach das Gewicht der abgelegten Extrudat-Portion (b) erfaßt und bei Abweichung um einen vorbestimmten Toleranzbetrag ausgeschieden wird und ggf. eine Korrektur des Soll-Wertes oder Einstellung eines temporären Soll-Wertes erfolgt.

2. Verfahren nach Anspruch 1, dadurch gekennzeichnet, daß die Oszillationsgeschwindigkeit der Ablage (120) und der Oszillationshub (Weg) während dem Ablegen des Extrudat-Strangs (a) veränderbar ist.

3. Verfahren nach einem der Ansprüche 1 oder 2, dadurch gekennzeichnet, daß der das Extrusionswerkzeug (100) impulsfrei verlassende Extrudat-Strang (a) in Form eines ggf. veränderliche Breite und/oder Dicke aufweisenden Bands der Ablage (120) zugeführt wird.

4. Verfahren nach Anspruch 3, dadurch gekennzeichnet, daß der Extrudat-Strang (a) mit einer Breite von etwa 100 - 1400mm und einer Dicke von etwa 3 - 15mm den Austritt (104) des Extrusionswerkzeugs (100) verläßt.

5. Vorrichtung zur Durchführung des Verfahrens nach Anspruch 1, dadurch gekennzeichnet, daß als Extrusionswerkzeug (100) eine längsgeschlitzte Rohrdüse vorgesehen ist, daß eine gesteuert oszillierend bewegbare Ablage (120) mit Wiegevorrichtung (130) sowie ggf. temperaturgeregelte Temperiereinrichtung (128) vorgesehen ist, und daß dem Austrittsschlitz (104) der Rohrdüse eine mindestens ein Schneideelement (93) aufweisende Trennvorrichtung (90), die Ablage (120) und eine beheizte Transportvorrichtung (140) nachgeordnet sind, zum Transport mindestens einer abgemessenen Extrudat-Portion (b) in ein oder mehrere Preßformwerkzeuge (210) mindestens einer Presse (200,200′).

6. Vorrichtung nach Anspruch 5, dadurch gekennzeichnet, daß die als Extrusionswerkzeug (100) dienende Rohrdüse einen an den Extruder (80) auswechselbar anflanschbaren beheizten Zylinder (101) mit einem parallel zur Zylinderlängsachse verlaufenden mantelseitigen Austrittsschlitz (104) aufweist und einen in den Zylinder (101) ragenden, von außen lageverstellbaren, ggf. beheizten Verdrängungskörper (110), der von einem Ende des Zylinders (101) zum extruderseitigen Werkzeuganschlußflansch (103) konisch oder parabolisch zulaufend ausgebildet ist.

7. Vorrichtung nach Anspruch 6, dadurch gekennzeichnet, daß der Austrittsschlitz (104) beheizt ist.

8. Vorrichtung nach Anspruch 6 oder 7, dadurch gekennzeichnet, daß die Länge des Austrittsschlitzes (104) etwa 100 - 1400mm und die Schlitzbreite etwa 3 - 15mm beträgt.

9. Vorrichtung nach einem der Ansprüche 6 bis 8, dadurch gekennzeichnet, daß die Rohrdüse eine ggf. beheizte Blende zur Einstellung der lichten Schlitzlänge und/oder -breite aufweist.

10. Vorrichtung nach einem der Ansprüche 5 bis 9, dadurch gekennzeichnet, daß die Trennvorrichtung (90) einen mechanisch, hydraulisch oder pneumatisch betätigbaren, durch die Wiegevorrichtung (130) gesteuerten Hubzylinder (91) aufweist, der vorzugsweise parallel zum Extrusionswerkzeug (100) verlaufend angeordnet ein längsverschiebbar geführtes Schneidemesser (92) besitzt.

11. Vorrichtung nach einem der Ansprüche 5 bis 9, dadurch gekennzeichnet, daß die Trennvorrichtung (90) zwei parallel zueinander verlaufende, beidseitig des Austrittsschlitzes (104) angeordnete Schneidemesser (92) besitzt, die zum Durchtrennen des Extrudat-Strangs (a) schlagartig zueinander zustellbar und wiedertrennbar sind, wobei die Trennvorrichtung (90) durch die Wiegevorrichtung (130) gesteuert wird.

12. Vorrichtung nach einem der Ansprüche 10 oder 11, dadurch gekennzeichnet, daß die Schneidemesser (93) beheizt und/oder antihaftbeschichtet sind.

13. Vorrichtung nach einem der Ansprüche 5 bis 12, dadurch gekennzeichnet, daß als Ablage (120) eine Waage, insbesondere eine Bandwaage vorgesehen ist, die ein antihaft-beschichtetes Endlos-Ablageband (124) aufweist, das mittels eines gesteuerten Antriebs (121) insbesondere schrittmotorangetriebene Rollen in zwei Richtungen bewegbar ist.

14. Vorrichtung nach Anspruch 13, dadurch gekennzeichnet, daß die Bandwaage über einen Schnellvor- und -rücklauf verfügt.

15. Vorrichtung nach einem der Ansprüche 13 oder 14, dadurch gekennzeichnet, daß die Bandgeschwindigkeit stufenlos regelbar ist.

16. Vorrichtung nach einem der Ansprüche 13 bis 15, dadurch gekennzeichnet, daß die Temperiereinrichtung (128) durch flexible, induktiv beheizbare, ggf. thermostatgesteuerte Heizbänder oder -drähte ausgebildet ist, die im Ablageband (124) verlaufend angeordnet sind.

17. Vorrichtung nach einem der Ansprüche 13 bis 16, dadurch gekennzeichnet, daß die Wiegevorrichtung (130), insbesondere aus einer Null-tarierbaren DMS-Wiegezellen-Anordnung besteht, die mit dem in einem Ablagetisch (123) aufgenommenen, die Rollen sowie das Ablageband (125) aufweisenden Bandführungsgestell (124) zusammenwirkt und ggf. ein Impulsgeber für die Schneidevorrichtung (90) besitzt.

18. Vorrichtung nach Anspruch 17, dadurch gekennzeichnet, daß das Bandführungsgestell (124) oder der Ablagetisch (123) quer zur Bandtransportrichtung verschiebbar gelagert ist und mittels eines regelbaren Antriebs (122), insbesondere einem Schrittmotor, ggf. oszillierend bewegbar ist.

19. Vorrichtung nach einem der Ansprüche 5 bis 18, mit einer mindestens ein antihaftbeschichtetes Endlos-Transportband (150) mit zugehörigem Antrieb (148) aufweisenden Transportvorrichtung (140) sowie mindestens einer Presse (200,200′), dadurch gekennzeichnet, daß mindestens ein das Transportband (150) aufweisender Transporttisch (143,143′) vorgesehen ist, der zwischen einer an die Bandwaage anschließenden Aufnahmestellung (A) und mindestens einer Beschickungsstellung (B) motorisch verfahrbar ist, in der eine örtlich gezielte Beschickung des geöffneten Preßformwerkzeugs (210) gegeben ist.

20. Vorrichtung nach Anspruch 19, dadurch gekennzeichnet, daß die Transportvorrichtung (140) modulartig aufgebaut mindestens zwei Transporttische (143,143′) aufweist, die abwechselnd in Aufnahmestellung (A) an die Bandwaage und bei Beladung mit mindestens einer Extrudat-Portion (b) gezielt nacheinander in eine Beschickungsstellung (B) an mindestens eine Presse (200,200′) gesteuert verfahrbar sind, in der mindestens eine Beschickungsmulde (c) oder ein Teilbereich hiervon mindestens eines Preßformwerkzeugs (210) mit mindestens einer Extrudat-Portion (b) beschickbar ist.

21. Vorrichtung nach einem der Ansprüche 19 oder 20, dadurch gekennzeichnet, daß das die Bandgeschwindigkeiten des Transportbandes (150) und des Ablagebandes (125) der Bandwaage synchronisierbar sind.

22. Vorrichtung nach einem der Ansprüche 19 bis 21, dadurch gekennzeichnet, daß der Transporttisch (143,143′) ein das Transportband (150) aufnehmendes Bandführungsgestell (151) aufweist, das auf dem Transporttisch (143) motorisch verschiebbar geführt und ggf. zum unteren Preßtisch (216) hin ausrichtbar, insbesondere kippbar ist, so daß mindestens der Endbereich des Transportbands (150) an oder über das zu beschickende Preßformwerkzeug (210) teleskopartig zur gezielten Beschickung zustellbar und zurückziehbar ist.

23. Vorrichtung nach Anspruch 22, dadurch gekennzeichnet, daß Vorrichtung nach Anspruch 22, dadurch gekennzeichnet, daß der Antrieb (147) des Bandführungsgestells (151) und der Antrieb (148) des Transportbandes (150) synchronisierbar sind, so daß ein Wiedereinfahren des Bandführungsgestells (151) bei gleichzeitiger Beschickungsbewegung des Transportbandes (150) zum exakten Ablegen des/der Extrudat-Portion/en (b) im Preßformwerkzeug (210) erfolgt.

24. Vorrichtung nach einem der Ansprüche 20 bis 23, mit einer Konditioniervorrichtung (160) zur Temperierung/Beheizung der in der Transportvorrichtung (140) befindlichen Extrudat-Portion/en (b), dadurch gekennzeichnet, daß die Konditioniervorrichtung (160) durch eine über dem in Aufnahmestellung (A) befindlichen Transporttisch (143,143′) ortsfest angeordnete motorisch auf- und abfahrbar gehaltene Isolierhaube (161) mit geregelt beheizbaren Innenraum ausgebildet ist.

25. Vorrichtung nach einem der Ansprüche 20 bis 23, mit einer Konditioniervorrichtung (160) zur Temperierung/Beheizung der in der Transportvorrichtung (140) befindlichen Extrudat-Portion/en (b), dadurch gekennzeichnet, daß am Transporttisch (143,143′) eine die Wärmeabstrahlung vermindernde Isolierhaube (161) mit ggf. geregelt beheizbarem Innenraum vorgesehen ist, die mittels einer Aufhängung über dem Transportband (150) motorisch auf- und abfahrbar gehalten ist.

26. Vorrichtung nach einem der Ansprüche 5 bis 25, dadurch gekennzeichnet, daß an dem der Transportvorrichtung (140) gegenüberliegenden Ende der Bandwaage ein motorisch angetriebenes Entsorgungsband (260) mit anschließender Extrudat-Regenerationsvorrichtung (250), insbesondere eine Kunststoffzerkleinerungseinrichtung vorgesehen ist.

27. Vorrichtung nach einem der Ansprüche 5 bis 26, mit einer der/n Presse/n (200,200′) nachgeordneten Entnahmevorrichtung (180) zum Weitertransport und/oder zur Entnahme der gepreßten Kunststoffteile aus dem Preßformwerkzeug (210), dadurch gekennzeichnet, daß in der Entnahmevorrichtung (180) ein motorisch angetriebener Entnahmegreifer (185) vorgesehen ist, der in das geöffnete Preßformwerkzeug (210) zur gezielten Entnahme des Kunststoffteils, insbesondere mittels einer Vakuumansaug-Einrichtung (187) einfahr- und zurückziehbar ist.

28. Vorrichtung nach einem der Ansprüche 5 bis 27, mit einer der/n Presse/n (200,200′) nachgeordneten Entnahmevorrichtung (180) zum Weitertransport und/oder Entnahme der gepreßten Kunststoffteile, dadurch gekennzeichnet, daß ein Entnahmeband (150) vorgesehen ist, das in das geöffnete Preßformwerkzeug (210) motorisch ein- und ausfahrbar ausgebildet ist und auf dessen um motorisch angetriebene Rollen (192) umlaufenden, ggf. antihaftbeschichtetem Endlosband (195) das gepreßte Kunststoffteil nach Auswurf aus dem Preßformwerkzeug (210) aufnehmbar und weitertransportierbar ist.

## Claims

1. Process for feeding a compression mould tool (210) with extruded plastics, in particular by using flowable crushed recycled plastic material, which is fed in a predetermined mixing ratio possibly by adding a thermoplastic material as a binding agent to an extruder (80), there intimately mixed with heating and possibly degasification, extruded through the discharge (104) of a heated extrusion tool (100) and fed in measured extruded portions (b) to a compression mould tool (210) by using a heated transportation device (140), **characterized in that** the extruded trace (a) leaving the extrusion tool (100) is deposited on a heated and controlled oscillating movable depot (120) in a meander-shaped form side by side and/or on top of each other, and this in an area which corresponds to the feeding area of the plastic element or an incremental area of it to be moulded in the compression mould tool (210) and which corresponds to the compression mass distribution and which is cut off when reaching a predetermined extruded portion size, thereby possibly several extruded portions (b) can be deposited on the depot (120) and fed to the transportation device (140), whereby the weight of the extruded trace (a) deposited on the depot (120) is determined, and a signal is sent to a cutting device (90) when reaching a predetermined desired value for cutting the extruded trace (a), after that the weight of the deposited extruded portion (b) is determined and removed when differing from a predetermined range of tolerance and possibly a correction of the desired value or preset of a temporary desired value is achieved.

2. Process according to claim 1, characterized in that the oscillation velocity of the depot (120) and the oscillation stroke (length) is variable during the deposition of the extruded trace (a).

3. Process according to one of claims 1 or 2, characterized in that the extruded trace (a) leaving the extrusion tool (100) in a pulse-free manner is fed to the depot (120) in form of a band possibly with variable width and/or thickness.

4. Process according to claim 3, characterized in that the extruded trace (a) leaves the discharge (104) of the extrusion tool (100) with a width of approx. 100 - 1400 mm and a thickness of approx. 3 - 15 mm.

5. Apparatus for carrying out the process of claim 1, characterized in that a pipe nozzle longitudinally slit is provided as an extrusion tool (100), that a controllable oscillating movable depot (120) with a weighing device (130) and possibly a temperature controlled tempering device (128) are provided, and that the discharge slit (104) of the pipe nozzle is followed by a cutting device (90) having at least one cutting element (93), by the depot (120) and by a heated transportation device (140) for transportation of at least one measured extruded portion (b) into one or more compression mould tools (210) of at least one press (200, 200′).

6. Apparatus according to claim 5, characterized in that the pipe nozzle serving as an extrusion tool (100) has a heated cylinder (101) which is changeable flangeable to the extruder (80) and which has a discharge slit (104) in its mantle running parallel to the longitudinal axis of the cylinder and having a displacement body (110) projecting into the cylinder (101), which is displaceable from outside and possibly heatable, and which is conically or parabolically formed form one end of the cylinder (101) to the mounting flange (103) at the side of the extruder.

7. Apparatus according to claim 6, characterized in that the discharge slit (104) is heated.

8. Apparatus according to claim 6 or 7, characterized in that the length of the discharge slit (104) is approx. 100 - 1400 mm and the width is approx. 3 - 15 mm.

9. Apparatus according to one of claims 6 to 8, characterized in that the pipe nozzle has an orifice possibly heated for adjusting the open length and/or the width of the slit.

10. Apparatus according to one of claims 5 to 9, characterized in that the cutting device (90) has a lifting cylinder (91) operable mechanically, hydraulically or pneumatically and controlled by the weighing device (130), the cylinder has a cutting knife (92) which is preferably arranged parallel to the extrusion tool (100) and is longitudinally guided.

11. Apparatus according to one of claims 5 to 9, characterized in that the cutting device (90) has two cutting knifes (92) which are arranged on both sides of the discharge slit (104) and which are parallel to each other, and which are suddenly infeedable to each other and dividable again for cutting the extruded trace (a), whereby the cutting device (90) is controlled by the weighing device (130).

12. Apparatus according to one of claims 10 or 11, characterized in that the cutting knifes (93) are heated and/or coated with an anti adhesive.

13. Apparatus according to one of claims 5 to 12, characterized in that a weighing machine, especially a conveyor type weigher, is provided as a depot (120), having an endless deposit band (125) which is coated with an anti adhesive, and which is movable in two directions by a controlled drive mechanism (121), especially by rollers driven by stepping motors.

14. Apparatus according to claim 13, characterized in that the conveyor type weigher has a fast forward and a fast return stroke.

15. Apparatus according to claim 13 or 14, characterized in that the speed of the conveyor is infinitely variable.

16. Apparatus according to one of claims 13 to 15, characterized in that the tempering device (128) is built up by flexible inductive heatable strip heaters or heating wires, possibly controlled by a thermostat, which are arranged along the deposit band (125).

17. Apparatus according to one of claims 13 to 16, characterized in that the weighing device (130) preferable consists of a zero adjustable resistive wire strain-weighing element-arrangement, cooperating with a conveying band guiding rack (124) incorporated in a deposit table (123), having the rollers as well as the deposit band (125), and having possibly an impulse sender for the cutting device (90).

18. Apparatus according to claim 17, characterized in that the conveying band guiding rack (124) or the deposit table (123) is supported slidable transverse to the conveying band transportation direction and is possibly oscillating movable with a controllable drive mechanism (122), preferable with a stepping motor.

19. Apparatus according to one of claims 5 to 18, with a transportation device (140) having an endless conveying band (150) coated with an anti adhesive and an associated drive mechanism (148) as well as at least one press (200, 200′) characterized in that at least one transportation table (143, 143′) is provided having the conveying band (150), which is movable by means of a motor between a receiving position (A) following to the conveyor type weigher and at least one feeding position (B), in which an exact local feeding of the open compression mould tool (210) is achieved.

20. Apparatus according to claim 19, characterized in that the transportation device (140) is built up in a modular design and comprises at least two transportation tables (143, 143′), which are movable alternately in a receiving position (A) to the conveyor type weigher and after being loaded with at least one extruded portion (b) are conveyed in a controlled manner one of after the other in a feeding position (B) to at least one press (200, 200′), in which at least one charging box (C) or a part of it of at least one compression mould tool (210) is feedable with at least one extruded portion (b).

21. Apparatus according to one of claims 19 or 20, characterized in that the belt velocities of the transportation band (150) and of the deposit band (125) of the conveyor belt weigher are synchronizable.

22. Apparatus according to one of claims 19 to 21, characterized in that the transportation table (143, 143′) has a conveying band guiding rack (151) which supports the transportation band (150) and which is movable guided on the transportation table (143) by a drive mechanism and possibly alignable to the lower pressing table (216), preferable pivotable, so that at least one end portion of the transportation band (150) is infeedable and retractable telescopically onto or over the compression mould tool (210) to be fed for an exact feeding.

23. Apparatus according to claim 22, characterized in that the drive mechanism (147) of the conveying band guiding rack (151) and the drive mechanism (148) of the transportation band (150) are synchronizable, so that a retracting of the conveying band guiding rack (151) and a simultaneously feeding movement of the transportation band (150) leads to an exact deposition of the extruded portion(s) (b) in the compression mould tool (210).

24. Apparatus according to one of claims 20 to 23 with a conditioner device (160) for tempering/heating of the extruded portion(s) (b) located in the transportation device (140), characterized in that the conditioner device (160) is design with an insulating hood (161) supported stationary in the receiving position (A) above the transportation table (143, 143′) ascendable and descendable by means of a motor, and having a controlled heatable interior space.

25. Apparatus according to one of claims 20 to 23 with a conditioner device (160) for tempering/heating of the extruded portion(s) (b) located in the transportation device (140), characterized in that an insulating hood (161) possibly with controlled heatable interior space is provided at the transportation table (143, 143′) for reducing the heat radiation, which is ascendable and descendable supported by means of a hanging motor apparatus above the transportation band (150).

26. Apparatus according to one of claims 5 to 25, characterized in that at the one end of the conveyor type weigher opposite to the transportation device (140) a motor driven discharge band (260) with a subsequent extrudate-regeneration device (250), especially a plastic material crushing unit, is provided.

27. Apparatus according to one of claims 5 to 26, with an extraction device (180) after the press(es) (200, 200′) for retransmission and/or extraction of the moulded plastic elements from the compression mould tool (210) characterized in that a motor driven extraction gripping device (185) is provided in the extraction device (180), which is insertable and removable into and from the open compression mould tool (210) for exact extraction of the plastic elements, especially by means of a vacuum suction device (187).

28. Apparatus according to one of claims 5 to 27, with an extraction device (180) after the press(es) (200, 200′) for retransmission and/or extraction of the moulded plastic elements from the compression mould tool (210) characterized in that an extraction band (150) is provided, which is constructed that it is movable by means of a motor into and from the open compression mould tool (210) and the moulded plastic elements are receivable and conveyable after the ejection from the compression mould tool (210) on the endless conveying band (195) possibly coated with an anti adhesive and which is circulating around motor driven rollers (192).

## Revendications

1. Procédé pour l'alimentation d'un moule (210) de presse avec du plastique extrudé, en particulier un procédé utilisant du plastique de recyclage granulé à écoulement libre, qui est introduit dans une extrudeuse (80) en une certaine proportion dans un mélange, éventuellement avec un ajout d'un thermoplastique comme agent liant, mélangé intimement éventuellement en chauffant et en dégazant, extrudé par la sortie (104) d'une tête d'extrusion chauffée (100) et fourni en portions d'extrudées mesurées (b) à un moule (210) de presse via une installation de transport chauffée (140), le procédé étant caractérisé en ce que le cordon de produit extrudé (a) sortant de la tête d'extrusion (100) est déposé sur une surface de réception (120) tempérée et à déplacement oscillant contrôlé, pour former des méandres l'un à côté de l'autre et/ou superposés sur une surface correspondant soit à la surface de chargement de la pièce en plastique à former dans le moule (210) de presse, soit à une partie de celle-ci, en assurant la répartition souhaitée de la masse à mouler, en ce que le cordon est séparé lorsqu'une certaine quantité de produit est extrudée, et en ce qu'il est éventuellement possible de déposer plusieurs portions extrudées (b) sur la surface de réception (120) pour être ensuite acheminées vers l'installation de transport (140), le poids du cordon de la substance extrudée (a) déposée sur la surface de réception (120) étant mesuré et lorsqu'une certaine valeur prédéterminée est atteinte, un signal est envoyé à un dispositif pour couper (90) afin de séparer le cordon de substance extrudée (a), après quoi le poids de la portion de produit extrudé (b) est mesuré et la portion est rejetée si le poids dépasse une certaine tolérance programmée à l'avance, la valeur cible est corrigée ou momentanément modifiée.

2. Procédé selon la revendication 1, caractérisé en ce que la vitesse d'oscillation de la surface de réception (120) et la distance (trajet) d'oscillation peuvent être modifiées pendant que le cordon extrudé (a) est déposé.

3. Procédé selon l'une des revendications 1 ou 2, caractérisé en ce que la tête d'extrusion (100) place le cordon extrudé (a) sans à-coups sur la surface de réception (120), sous la forme d'une bande présentant une largeur et/ou une épaisseur modifiables.

4. Procédé selon la revendication 3. caractérisé en ce que le cordon extrudé (a) a une largeur de 100 - 1400 mm environ et une épaisseur de 3 - 15 mm environ, à la sortie (104) de la tête d'extrusion (100).

5. Installation pour mettre en oeuvre le procédé selon la revendication 1, caractérisée en ce que l'on utilise en tant que tête d'extrusion (100) une buse tubulaire comportant une fente longitudinale, en ce que la surface de réception à oscillations contrôlées (120) est pourvue d'une installation de pesée (130) ainsi que d'une installation de tempérage (128) et en ce que la fente de sortie (104) de la buse tubulaire comporte au moins un dispositif pour couper (90) avec un élément pour couper (93), la surface de réception (120) et une installation de transport (140) étant agencées en aval pour transporter au moins une portion extrudée pesée (b) vers un ou plusieurs moules (210) d'au moins une presse (200, 200′).

6. Installation selon la revendication 5, caractérisée en ce que la buse tubulaire servant de tête d'extrusion (100) comporte un cylindre chauffé (101) boulonné de manière interchangeable à l'extrudeuse (80) et ayant une fente de sortie parallèle à l'axe longitudinal du cylindre et du côté de la chemise et également un corps de formage (110) faisant saillie dans le cylindre (101) en étant réglable en position depuis l'extérieur et éventuellement chauffé, et ayant une forme conique ou parabolique croissant depuis l'une des extrémités du cylindre (101) jusqu'à l'extrémité d'extrusion de l'interface de l'outil (103).

7. Installation selon la revendication 6, caractérisée en ce que la rente de sortie (104) est chauffée.

8. Installation selon la revendication 6 ou 7, caractérisée en ce que la longueur de la fente de sortie (104) est de 100 1400 mm environ et sa largeur de 3 - 15 mm environ.

9. Installation selon l'une quelconque des revendications 6 à 8, caractérisée en ce que la buse tubulaire comporte un obturateur (éventuellement chauffé) pour fixer la longueur et/ou la largeur de la fente.

10. Installation selon l'une des revendications 5 à 9, caractérisée en ce que le dispositif pour couper (90) comporte un cylindre (91) à commande mécanique, hydraulique ou pneumatique, contrôlé par l'installation de pesée (130), qui comprend un couteau de séparation (92) qui est de préférence parallèle à la tête d'extrusion en étant déplaçable longitudinalement.

11. Installation selon l'une des revendications 5 à 9, caractérisée en ce que le dispositif pour couper (90) comporte deux couteaux de séparation (92) sur les deux côtés de la fente de sortie (104) et parallèles l'un à l'autre, qui pour couper le cordon extrudé (a) se rapprochent l'un de l'autre brutalement pour s'éloigner ensuite, le dispositif pour couper (90) étant commandé par l'installation de pesée (130).

12. Installation selon l'une des revendications 10 ou 11, caractérisée en ce que le couteau de séparation (93) est chauffé et en ce qu'il comporte un revêtement anti-adhésion.

13. Installation selon l'une des revendications 5 à 12, caractérisée en ce que la surface de réception (120) est pourvue d'une balance, de préférence d'une balance à bande du type à bande de réception sans fin (124) avec un revêtement anti-adhésion, qui peut se déplacer dans les deux directions à l'aide d'un dispositif d'entraînement (121) constitué en particulier des rouleaux entraînés par un moteur pas à pas.

14. Installation selon la revendication 13, caractérisée en ce que la balance à bande est pourvue d'un entraînement rapide vers l'avant ou l'arrière.

15. Installation selon l'une des revendications 13 ou 14, caractérisée en ce que la vitesse de la bande peut être ajustée progressivement.

16. Installation selon l'une des revendications 13 à 15, caractérisée en ce que l'installation de tempérage (128) est constituée par des bandes ou des fils de chauffage flexibles à chauffage inductif qui sont disposés dans la bande de réception (124) et qui sont éventuellement contrôlés par un thermostat.

17. Installation selon l'une des revendications 13 à 16, caractérisée en ce que l'installation de pesée (130) comporte en particulier une installation pour ajuster le zéro réalisée avec une cellule de pesée pourvue d'un extensomètre, qui coopère avec le guide de bande (124) comportant des rouleaux et une bande de réception (125) en étant disposé sur une table de réception (123), et en ce qu'elle comporte éventuellement un émetteur d'impulsions, pour actionner le dispositif pour couper (90),

18. Installation selon la revendication 17, caractérisée en ce que le guide de bande (124) ou la table de réception (123) sont déplaçables perpendiculairement à l'installation de transport à bande et qu'il peut effectuer un mouvement oscillant sous la commande d'une installation réglable (122), en particulier d'un moteur pas à pas.

19. Installation selon l'une des revendications 5 à 18 avec au moins une installation de transport (140) comportant une bande de transport sans fin (150) portant un revêtement anti-adhésion et une commande appropriée (148), ainsi qu'au moins une presse (200, 200′) caractérisée en ce qu'il est prévu au moins une table de transport (143, 143′) commandée par un moteur et pourvue de la bande de transport (150), entre l'installation de réception (A) qui suit la balance à bande et au moins une installation de chargement (B), située dans la région de chargement du moule (210) ouvert de presse.

20. Installation selon la revendication 19, caractérisée en ce que l'installation de transport (140) est réalisée de manière modulaire à partir de deux tables de transport au moins (143, 143′) qui sont positionnées par alternance dans l'installation de réception (A) sur la balance à bande et en ce que lors du chargement d'au moins une presse (200, 200′) avec au moins une portion de substance extrudée (b) elles viennent de manière consécutive à l'endroit de chargement (B), au moins une trémie de chargement (c) ou une partie de celle-ci pouvant être chargées depuis la tête d'extrusion (210), ce chargement comprenant au moins une portion de substance extrudée (b),

21. Installation selon l'une des revendications 19 ou 20, caractérisée en ce que les vitesses de transport de la bande de transport (150) et de la bande réceptrice (125) de la balance à bande sont synchronisées.

22. Installation selon l'une des revendications 19 à 21, caractérisée en ce que la table de transport (143, 143′) comporte un guide de bande (151) présentant une bande de transport (150), agencée d'une manière déplaçable sur la table (143) et le cas échéant pouvant être déplacée et en particulier basculée vers la table de moule inférieure (216), de sorte qu'au moins la zone terminale de la bande de transport (150) est agencée d'une manière télescopique par rapport aux moules (210) de presses à charger pour effectuer le chargement souhaité et revenir en arrière.

23. Installation selon la revendication 22, caractérisée en ce que la commande (147) du guide de bande (151) et la commande (148) de la bande de transport (150) sont synchronisées, de sorte qu'une nouvelle alimentation du guide de bande (151) lors d'un mouvement simultané de chargement de la bande de transport (150) aboutit à un chargement précis de la pièce/portion extrudée (b) dans le moule (210) de presse.

24. Installation selon une des revendications 20 à 23, avec une installation de conditionnement (160) pour tempérer/chauffer la pièce/portion extrudée (b) se trouvant sur l'installation de transport (140), caractérisée en ce que l'installation de conditionnement (160) consiste en un couvercle isolant (161) fixe pouvant être ouvert et fermé avec un moteur et possédant un volume intérieur à chauffage commandé, ce couvercle se trouvant au-dessus de la table de transport (143, 143′) qui se trouve à l'emplacement de réception (A).

25. Installation selon l'une des revendications 20 à 23 avec une installation de conditionnement (160) pour tempérer/chauffer la pièce/portion extrudée (b) se trouvant dans l'installation de transport (140), caractérisée en ce que la table de transport (143, 143′) est pourvue d'un couvercle isolant diminuant les radiations thermiques (161), avec un espace interne dont le chauffage peut éventuellement être régulé, ce couvercle étant ouvert ou fermé par un moteur et tenu grâce à une suspension au-dessus de la bande de transport.

26. Installation selon l'une des revendications 5 à 25, caractérisée en ce que l'extrémité de la balance à bande jouxtant l'installation de transport (140) comporte une bande d'évacuation à moteur (260) avec une installation de récupération de la matière extrudée en aval (250), en particulier une installation de granulation pour la matière plastique.

27. Installation selon l'une des revendications 5 à 26 avec une installation d'évacuation (180) en aval de la ou des presses (200, 200′) pour évacuer/transporter les pièces en plastique moulé provenant des moules (210) de presse, caractérisée en ce que l'installation d'évacuation (180) est pourvue d'un système de préhension (185) à moteur pour évacuer les pièces moulées des moules (210), en particulier à l'aide d'une installation à aspiration par le vide (187) effectuant un mouvement de va et vient.

28. Installation selon l'une des revendications 5 à 27 avec une installation d'évacuation (180) en aval de la presse ou des presses (200, 200′) pour transporter et/ou évacuer les pièces moulées en plastique, caractérisée en ce qu'une bande d'évacuation (150) est prévue, qui est conçue pour se rapprocher et s'éloigner automatiquement du moule (210) ouvert de la presse, cette bande étant entraînée par des rouleaux (192) et conçue comme une bande sans fin avec un revêtement anti-adhésion (195) qui évacue et transporte les articles moulés après leur éjection du moule (210) de la presse.
